# EUROPEAN PATENT APPLICATION

(11) **EP 4 303 970 A1**
(43) Date of publication of application: **10.01.2024**
(21) Application number: 22763392.2
(22) Date of filing: 03.03.2022
(51) Int. Cl.: H01M 8/0273, H01M 8/10, H01M 8/1004

(54) **MEMBRANE ELECTRODE ASSEMBLY AGGREGATE ROLL, MEMBRANE ELECTRODE ASSEMBLY, AND SOLID POLYMER FUEL CELL**

(30) Priority: 03.03.2021 JP 2021033803
(71) Applicant: TOPPAN INC., Tokyo 110-0016 (JP)
(72) Inventor: IGARASHI, Yuuki, Tokyo 110-0016 (JP)
(74) Representative: Hoffmann Eitle
(86) International application number: PCT/JP2022/009169
(87) International publication number: WO 2022/186340

(57) **Abstract**

A combined roll is a roll of a wound strip that includes a plurality of layered bodies each including a polymer electrolyte membrane and a pair of electrode catalyst layers, and a supporting member including a plurality of frame units arranged in a single direction, with each frame unit supporting one layered body. The frame unit surrounds the electrode catalyst layers and is in contact with the electrode catalyst layers, with the outer periphery of the polymer electrolyte membrane held inside the frame unit in the thickness direction.

## Description

### [Technical Field]

The present disclosure relates to a membrane electrode assembly combined roll, a membrane electrode assembly, and a polymer electrolyte fuel cell.

### [Background Art]

Fuel cells generate electric power using a chemical reaction between a fuel such as hydrogen and an oxidant such as oxygen. Fuel cells have attracted attention as a power generation system having high power generation efficiency and capable of reducing environmental burdens and noise compared with traditional power generation systems that use fuels such as petroleum. Among fuel cells, polymer electrolyte fuel cells, which are capable of operating at low temperatures and being reduced in size, are expected to be used as power supplies such as portable power supplies, household power supplies, and on-vehicle power supplies.

A polymer electrolyte fuel cell includes a membrane electrode assembly including an electrode catalyst layer that forms a fuel electrode as an anode, an electrode catalyst layer that forms an air electrode as a cathode, and a polymer electrolyte membrane sandwiched between the two electrode catalyst layers. The outside of each electrode catalyst layer is surrounded by a frame-shaped gasket member. The gasket member reinforces the membrane electrode assembly composed mainly of the polymer electrolyte membrane, which has low rigidity, and also prevents leakage of gas supplied to the fuel electrode and the air electrode. Additionally, a gas diffusion layer for diffusing supplied gas is laminated on each electrode catalyst layer. The membrane electrode assembly is sandwiched between a pair of separators each including a flow channel for gas delivery, which forms a single polymer electrolyte fuel cell.

The fuel electrode is supplied with a fuel gas containing hydrogen, and the air electrode is supplied with an oxidant gas containing oxygen. From the fuel gas supplied to the fuel electrode, protons and electrons are generated through the action of the catalyst included in the electrode catalyst layer. The protons are transferred by the polymer electrolyte contained in the electrode catalyst layer and the polymer electrolyte membrane, and migrate through the polymer electrolyte membrane to the air electrode. The electrons are removed from the fuel electrode to an external circuit, and flow through the external circuit to the air electrode. At the air electrode, the oxidant gas reacts with the protons and electrons migrating from the fuel electrode to generate water. Thus, as the electrons pass through the external circuit, an electric current is produced.

The formation of a polymer electrolyte membrane and an electrode catalyst layer needs expensive materials such as a polymer electrolyte and platinum-group noble metals serving as a catalyst. Accordingly, there is a need to reduce the cost of manufacturing membrane electrode assemblies. One way to reduce the manufacturing cost is to use a roll-to-roll system (for example, see PTL 1). Generally, a roll-to-roll system is suitable for mass production and may reduce the manufacturing cost due to its more efficient manufacturing process than a sheet-to-sheet system in which articles are produced one at a time.

### [Citation List]

### [Patent Literatures]

PTL 1: WO 2019/035424 A

### [Summary of the Invention]

### [Technical Problem]

In a typical roll-to-roll system, a strip is produced by applying an electrode catalyst layer to a long belt of polymer electrolyte membrane, and the strip is cut into membrane electrode assemblies. In such a strip, the polymer electrolyte membrane is placed also in an area not necessary as the membrane electrode assemblies, such as the peripheral edge for the application of the electrode catalyst layer and the transportation of the strip, so that the reduction in the manufacturing cost is insufficient in view of the use of materials.

Furthermore, the polymer electrolyte membrane is continuous in the longitudinal direction of the strip, and thus when a gasket member is placed on the strip, the polymer electrolyte membrane and the gasket member have the same size in the longitudinal direction. As a result, the polymer electrolyte membrane and the gasket member are likely to overlap each other in a larger area outside the electrode catalyst layer. With the polymer electrolyte membrane and the gasket member overlapping each other in a large area, the membrane electrode assembly may wrinkle due to the difference in the amount of thermal contraction between the polymer electrolyte membrane and the gasket member during the thermocompression bonding of the gas diffusion layer. Wrinkles in the membrane electrode assembly may make it difficult to fit separators to the membrane electrode assembly and may cause leakage of gas supplied to the fuel electrode and the air electrode.

For the purpose of reduction in the manufacturing cost as well as facilitation of storage and transportation of membrane electrode assemblies, there is a need for rolls of strips obtained by joining multiple membrane electrode assemblies together.

### [Solution to Problem]

A combined roll for solving the above problem is a roll of a wound strip that includes a plurality of layered bodies each including a polymer electrolyte membrane and a pair of electrode catalyst layers in contact with the polymer electrolyte membrane with the polymer electrolyte membrane sandwiched between them in a thickness direction, and a supporting member including a plurality of frame units arranged continuously in a single direction, with each frame unit supporting one of the layered bodies. As viewed in the thickness direction of the polymer electrolyte membrane, the polymer electrolyte membrane has an outer periphery that is a part extending beyond the electrode catalyst layers, with the frame units each having an outer shape larger than the outer shape of the polymer electrolyte membrane. The frame unit surrounds the electrode catalyst layers and is in contact with the electrode catalyst layers, with the outer periphery held inside the frame unit in the thickness direction. As viewed in the thickness direction of the polymer electrolyte membrane, the outer periphery has a width of 1 mm or more, whereas the ratio the area of the outer periphery to the area of the electrode catalyst layer is less than or equal to 0.2.

A combined roll for solving the above problem is a roll of a wound strip that includes a plurality of layered bodies each including a polymer electrolyte membrane and a pair of electrode catalyst layers in contact with the polymer electrolyte membrane with the polymer electrolyte membrane sandwiched between them in a thickness direction, a plurality of frame units arranged in a single direction, the plurality of frame units each supporting one of the layered bodies, and an attachment member that joins adjacent ones of the frame units together. As viewed in the thickness direction of the polymer electrolyte membrane, the polymer electrolyte membrane has an outer periphery that is a part extending beyond the electrode catalyst layers, with the frame units each having an outer shape larger than the outer shape of the polymer electrolyte membrane. The frame unit surrounds the electrode catalyst layers and is in contact with the electrode catalyst layers, with the outer periphery held inside the frame unit in the thickness direction.

A membrane electrode assembly for solving the above problem is a membrane electrode assembly obtained by dividing the combined roll by each of the frame units supporting the layered bodies.

A membrane electrode assembly for solving the above problem is a membrane electrode assembly including a layered body that includes a polymer electrolyte membrane and a pair of electrode catalyst layers in contact with the polymer electrolyte membrane with the polymer electrolyte membrane sandwiched between them in a thickness direction, and a frame unit that supports the layered body. As viewed in the thickness direction of the polymer electrolyte membrane, the polymer electrolyte membrane has an outer periphery that is a part extending beyond the electrode catalyst layers, with the frame unit having an outer shape larger than the outer shape of the polymer electrolyte membrane. The frame unit surrounds the electrode catalyst layers and is in contact with the electrode catalyst layers, with the outer periphery held inside the frame unit in the thickness direction. As viewed in the thickness direction of the polymer electrolyte membrane, the outer periphery has a width of 1 mm or more, whereas the ratio of the area of the outer periphery to the area of the electrode catalyst layer is less than or equal to 0.2. The membrane electrode assembly has an end surface that is positioned on the edge of the frame unit and is a single surface continuous in the thickness direction.

A membrane electrode assembly for solving the above problem is a membrane electrode assembly including a layered body that includes a polymer electrolyte membrane and a pair of electrode catalyst layers in contact with the polymer electrolyte membrane with the polymer electrolyte membrane sandwiched between them in a thickness direction, a frame unit that supports the layered body, and an attachment member at the edge of the frame unit and extending along the outer periphery of the frame unit as viewed in the thickness direction of the polymer electrolyte membrane. As viewed in the thickness direction of the polymer electrolyte membrane, the polymer electrolyte membrane has an outer periphery that is a part extending beyond the electrode catalyst layers, with the frame unit having an outer shape larger than the outer shape of the polymer electrolyte membrane. The frame unit surrounds the electrode catalyst layers and is in contact with the electrode catalyst layers, with the outer periphery held inside the frame unit in the thickness direction. The attachment member contains a glue or an adhesive and is joined to the frame unit.

For each of the above configurations, the rolled form of the multiple membrane electrode assemblies facilitates storage and transportation of the membrane electrode assemblies. Additionally, the layered bodies are placed in parts of the combined roll, and neither the polymer electrolyte membrane nor the electrode catalyst layers are placed at the outer edge of the membrane electrode assembly. This roll can thus reduce the amount of materials for the polymer electrolyte membranes used to form the membrane electrode assemblies compared with a roll in which a continuous polymer electrolyte membrane is formed.

Furthermore, since the outer periphery of the polymer electrolyte membrane has a width of 1 mm or more, the adhesion of the frame unit to the outer periphery increases, thus preventing the supporting member from separating from the polymer electrolyte membrane. In addition, since the ratio of the area of the outer periphery to the area of the electrode catalyst layer is less than or equal to 0.2, the amount of the materials for the polymer electrolyte membrane used to form the membrane electrode assembly can be appropriately reduced. Moreover, the area of the overlap between the polymer electrolyte membrane and the frame unit is not excessively large, and accordingly the edge of the membrane electrode assembly is less likely to wrinkle during the thermocompression bonding of the gas diffusion layers. The wrinkle control can prevent leakage of gas supplied to the electrode catalyst layers.

A polymer electrolyte fuel cell for solving the above problem includes: the membrane electrode assembly; and a pair of separators with the membrane electrode assembly in between.

This configuration enables reduction in materials and control of gas leakage in the membrane electrode assembly, and can thus reduce the cost of producing the polymer electrolyte fuel cell as well as prevent a decrease in the output caused by a gas leakage.

### [Advantageous Effects of the Invention]

The present disclosure facilitates storage and transportation of membrane electrode assemblies.

### [Brief Description of the Drawings]

Fig. 1 is a perspective view of a membrane electrode assembly combined roll according to a first embodiment.
Fig. 2 is a sectional view of the membrane electrode assembly combined roll according to the first embodiment.
Fig. 3 is a sectional view of a membrane electrode assembly according to the first embodiment.
Fig. 4 is a schematic view illustrating the configuration of an electrode catalyst layer included in the membrane electrode assembly according to the first embodiment.
Fig. 5 is an exploded perspective view of a polymer electrolyte fuel cell according to the first embodiment.
Fig. 6 is a perspective view of a membrane electrode assembly combined roll according to a second embodiment.
Fig. 7 is a sectional view of the membrane electrode assembly combined roll according to the second embodiment.

### [Description of the Embodiments]

### (First Embodiment)

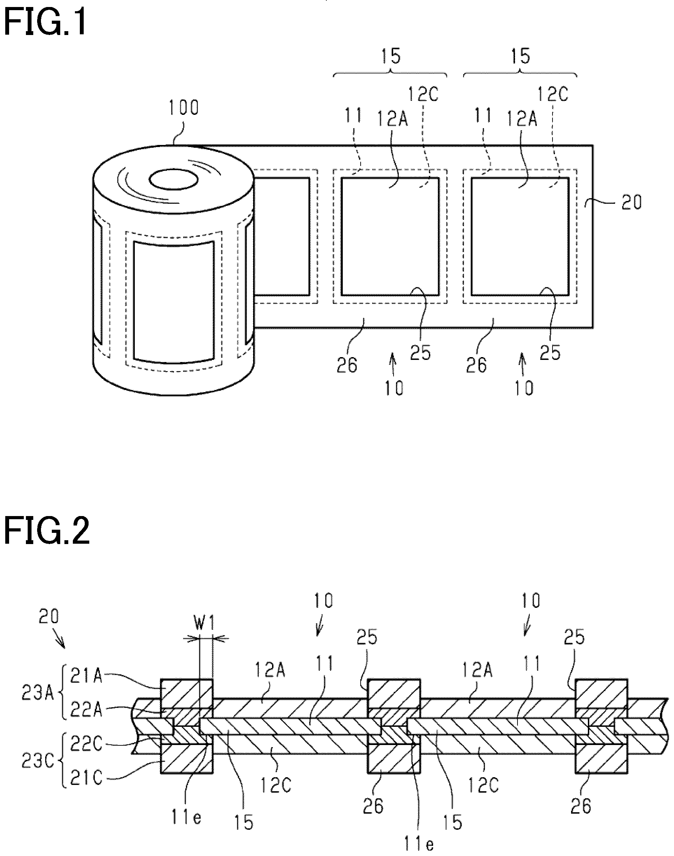

A first embodiment of a membrane electrode assembly combined roll, a membrane electrode assembly, and a polymer electrolyte fuel cell will be described with reference to Figs. 1 to 5. It should be appreciated that the expression "at least one of A and B" herein means A alone, B alone, or A and B together.

### [Combined Roll]

As illustrated in Fig. 1, a membrane electrode assembly combined roll 100 has a structure of a rolled strip divisible into multiple membrane electrode assemblies 10.

The combined roll 100 includes multiple layered bodies 15 each including a polymer electrolyte membrane 11 and a pair of electrode catalyst layers 12A and 12C, and a single supporting member 20. The supporting member 20 includes multiple frame units 26 arranged continuously in a single direction, and the frame units 26 support the layered bodies 15 on a one-to-one basis. The direction in which the multiple frame units 26 are arranged is the longitudinal direction of the supporting member 20, that is, the longitudinal direction of the combined roll 100. In the longitudinal direction of the combined roll 100, adjacent layered bodies 15 are apart from each other, and the frame unit 26 supports the layered body 15 in a manner that surrounds the outer periphery of the layered body 15. In other words, the supporting member 20 has multiple openings 25 arranged in its longitudinal direction, with the layered bodies 15 fitted in the corresponding openings 25.

The layered body 15 and the frame unit 26 form the membrane electrode assembly 10. In the combined roll 100, the multiple membrane electrode assemblies 10 are arranged in the longitudinal direction of the combined roll 100.

As illustrated in Fig. 2, the polymer electrolyte membrane 11 is sandwiched in its thickness direction between the electrode catalyst layer 12A and the electrode catalyst layer 12C. The electrode catalyst layer 12A is in contact with one of the two surfaces of the polymer electrolyte membrane 11 and forms a fuel electrode serving as the anode of the polymer electrolyte fuel cell. The electrode catalyst layer 12C is in contact with the other of the two surfaces of the polymer electrolyte membrane 11 and forms an air electrode serving as the cathode of the polymer electrolyte fuel cell.

As viewed in the thickness direction of the polymer electrolyte membrane 11, the electrode catalyst layer 12A and the electrode catalyst layer 12C have the same outer shape. The polymer electrolyte membrane 11 has an outer shape larger than the outer shape of the electrode catalyst layers 12A and 12C. That is, as viewed in the thickness direction, the polymer electrolyte membrane 11 has an outer periphery 11e that is the part extending beyond the electrode catalyst layers 12A and 12C. As viewed in the thickness direction, the outer periphery 11e has a frame shape surrounding the electrode catalyst layers 12A and 12C.

The outer shapes of the polymer electrolyte membrane 11 and the electrode catalyst layers 12A and 12C are not limited to a particular form, and may be, for example, rectangular. Between adjacent membrane electrode assemblies 10 in the combined roll 100, the polymer electrolyte membranes 11 are not connected, the electrode catalyst layers 12A are not connected, and also the electrode catalyst layers 12C are not connected.

The supporting member 20 includes an adhesive sheet 23A that is a laminate of a supporting substrate 21A and an adhesive layer 22A and an adhesive sheet 23C that is a laminate of a supporting substrate 21C and an adhesive layer 22C, and has a structure in which the adhesive layer 22A and the adhesive layer 22C are pasted together in such a way as to face each other. The openings 25 through the supporting member 20 each have the same shape as the electrode catalyst layers 12A and 12C as viewed in the thickness direction of the polymer electrolyte membrane 11. As viewed in the thickness direction, the frame units 26 each have an outer shape larger than the outer shape of the polymer electrolyte membrane 11.

The outer periphery 11e of the polymer electrolyte membrane 11 is sandwiched between the adhesive layer 22A and the adhesive layer 22C. Outside the polymer electrolyte membrane 11, the adhesive layer 22A and the adhesive layer 22C are in direct contact with each other. More specifically, in the area between adjacent polymer electrolyte membranes 11, or in other words, the boundary area between adjacent membrane electrode assemblies 10, the adhesive layer 22A and the adhesive layer 22C are in direct contact with each other.

The electrode catalyst layers 12A and 12C are located in the opening 25, and the end surface of the electrode catalyst layers 12A and 12C is in contact with the inner peripheral surface of the opening 25 in the supporting member 20. Specifically, the outside of the electrode catalyst layer 12A is surrounded by the adhesive sheet 23A, and the outside of the electrode catalyst layer 12C is surrounded by the adhesive sheet 23C.

In this manner, each frame unit 26 of the supporting member 20 surrounds the electrode catalyst layers 12A and 12C and is in contact with the electrode catalyst layers 12A and 12C, with the outer periphery 11e of the polymer electrolyte membrane 11 held inside the frame unit 26 in the thickness direction. In this configuration, the electrode catalyst layer 12A is exposed through the part of the opening 25 adjacent to the adhesive sheet 23A, and the electrode catalyst layer 12C is exposed through the part of the opening 25 adjacent to the adhesive sheet 23C, whereas the polymer electrolyte membrane 11 is not exposed from the combined roll 100.

The placed supporting member 20 increases the rigidity of the strip forming the combined roll 100 to facilitate winding the strip into a roll. Furthermore, the structure in which the layered bodies 15 do not protrude from the supporting member 20 in the thickness direction can prevent a layered body 15 from being crushed by other layered bodies 15 or the supporting member 20 when being wound into a roll.

In the combined roll 100, the layered bodies 15 are placed at intervals, and neither the polymer electrolyte membrane 11 nor the electrode catalyst layers 12A and 12C are placed at the outer edge of the membrane electrode assembly 10. This roll can thus reduce the amount of materials for the polymer electrolyte membranes 11 used to form the membrane electrode assemblies 10 compared with a roll in which a continuous polymer electrolyte membrane 11 is formed. For example, when the membrane electrode assembly 10 has a part not contributing to any electrode reaction but needed to support the strip extending from the combined roll 100 during the transportation, winding, or cutting of the combined roll 100, this part may consist of the supporting member 20.

The combined roll 100 of this type can be incorporated into a roll-to-roll production method and reduce the use of expensive materials. In addition, the rolled form of the multiple membrane electrode assemblies 10 facilitates storage and transportation of the membrane electrode assemblies 10.

As viewed in the thickness direction of the polymer electrolyte membrane 11, the outer periphery 11e has a width W1 of 1 mm or more. The width W1 that is 1 mm or more increases the adhesion of the frame unit 26 to the outer periphery 11e, thus preventing the supporting member 20 from separating from the polymer electrolyte membrane 11. As the width W1 decreases, the amount of materials for the polymer electrolyte membrane 11 used to form the membrane electrode assembly 10 may decrease.

As viewed in the thickness direction, the area of the region in which the electrode catalyst layers 12A and 12C are positioned is referred to as a catalyst layer area Se, and the area of the outer periphery 11e is referred to as an outer periphery area Sm. In this case, the ratio of the outer periphery area Sm to the catalyst layer area Se (Sm/Se) is less than or equal to 0.2. Since the ratio is less than or equal to 0.2, the polymer electrolyte membrane 11 is not much larger than the region in which the electrode catalyst layers 12A and 12C are formed, that is, the region in which an electrode reaction occurs. This enables an appropriate reduction in the amount of the materials for the polymer electrolyte membrane 11 used to form the membrane electrode assembly 10. Furthermore, since the ratio is less than or equal to 0.2, the area of the overlap between the polymer electrolyte membrane 11 and the supporting member 20 is not much larger than the region in which the electrode catalyst layers 12A and 12C are formed. Accordingly, when gas diffusion layers are laminated on and joined to the electrode catalyst layers 12A and 12C by thermocompression bonding, the edge of the membrane electrode assembly 10 is less likely to have wrinkles caused by the difference between the thermal contraction levels of the polymer electrolyte membrane 11 and the supporting member 20. The wrinkle control can prevent leakage of gas supplied to the electrode catalyst layers 12A and 12C.

By dividing the combined roll 100 by the frame units 26 supporting the layered bodies 15, the combined roll 100 separates into the individual membrane electrode assemblies 10. Specifically, the combined roll 100 is divided by cutting, in the thickness direction, the boundary area between every adjacent frame unit 26, that is, the area consisting of the supporting member 20 between every adjacent polymer electrolyte membrane 11. The cutting is performed with, for example, a cutting tool such as a cutter, or a laser.

### [Membrane Electrode Assembly]

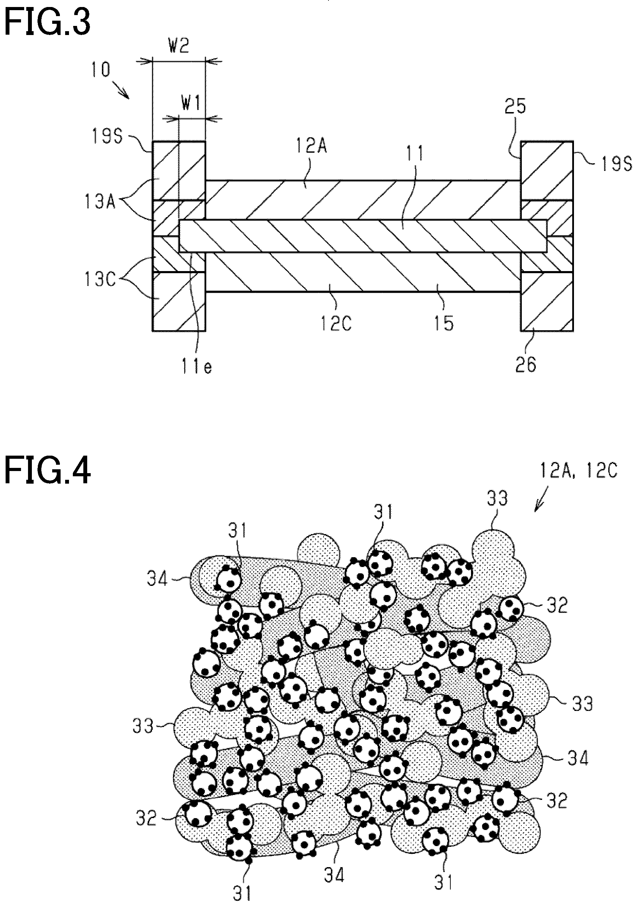

Fig. 3 illustrates a membrane electrode assembly 10 formed by dividing the above-described combined roll 100. The membrane electrode assembly 10 includes a polymer electrolyte membrane 11, a pair of electrode catalyst layers 12A and 12C with the polymer electrolyte membrane 11 in between, and a frame unit 26 composed of a pair of gasket members 13Aand 13C.

The gasket members 13A and 13C are members formed by cutting the supporting member 20. The gasket member 13A is a member obtained by cutting the adhesive sheet 23A, and the gasket member 13C is a member obtained by cutting the adhesive sheet 23C. The laminate of the gasket member 13Aand the gasket member 13C corresponds to one frame unit 26 of the supporting member 20.

The outer periphery 11e of the polymer electrolyte membrane 11 is sandwiched between the gasket member 13A and the gasket member 13C. As viewed in the thickness direction of the polymer electrolyte membrane 11, the frame unit 26 has a width W2 greater than the width W1 of the outer periphery 11e. As described above, as the width W1 decreases, the amount of the materials for the polymer electrolyte membrane 11 used to form the membrane electrode assembly 10 may decrease, and thus the width W1 is preferably equal to or smaller than 1/2 of the width W2. A width W2 that is at least twice as large as the width W1 enables the combined roll 100 to have a sufficient length between every adjacent polymer electrolyte membrane 11, facilitating determination of cutting positions on the combined roll 100.

The gasket member 13A surrounds the outside of the electrode catalyst layer 12A, and the gasket member 13C surrounds the outside of the electrode catalyst layer 12C. The frame unit 26 covers the overall outer periphery 11e of the polymer electrolyte membrane 11 outside the electrode catalyst layers 12A and 12C, preventing gas leakage from near the outer periphery 11e.

The membrane electrode assembly 10 has an end surface 19S that is one surface continuous in the thickness direction. The end surface 19S is a surface formed by cutting the combined roll 100 and positioned at the end of the membrane electrode assembly 10 in the direction corresponding to the longitudinal direction of the combined roll 100. That is, the end surface 19S is positioned at the end of the frame unit 26. When a membrane electrode assembly 10 is formed by cutting the other membrane electrode assemblies 10 on both sides in the longitudinal direction of the combined roll 100, the membrane electrode assembly 10 has end surfaces 19S at both ends in the direction corresponding to the longitudinal direction of the combined roll 100.

For example, when the combined roll 100 is cut with a cutting tool such as a cutter, the end surface 19S is flat. When the combined roll 100 is cut with a laser, the end surface 19S is a surface having a part deformed or altered by heat from the laser. When the gasket members 13A and 13C are cut for each member separately before being bonded together, the resultant end surface of the membrane electrode assembly has a difference in level that is a small gap between the members, or in other words, a discontinuous part. In contrast, the end surface 19S of the membrane electrode assembly 10 in the present embodiment is a single continuous surface without the aforementioned discontinuous part.

### [Materials for Combined Roll and Membrane Electrode Assembly]

Materials for the components included in the combined roll 100 and the membrane electrode assembly 10 will now be described.

The polymer electrolyte membrane 11 includes a polymer electrolyte. The polymer electrolyte used for the polymer electrolyte membrane 11 may be any polymer electrolyte having proton conductivity, and may be, for example, a fluoropolymer electrolyte or a hydrocarbon polymer electrolyte. The fluoropolymer electrolyte may be, for example, a polymer electrolyte having a tetrafluoroethylene backbone, and an example of the polymer electrolyte is Nafion (registered trademark, manufactured by DuPont). An example of the hydrocarbon polymer electrolyte is sulfonated polyether ketone, sulfonated polyether sulfone, sulfonated polyether ether sulfone, sulfonated polysulfide, or sulfonated polyphenylene.

As illustrated in Fig. 4, the electrode catalyst layers 12A and 12C include catalytic substances 31, conductive carriers 32, and polymer electrolyte aggregates 33. The electrode catalyst layers 12A and 12C may further include fibrous substances 34. The two electrode catalyst layers 12A and 12C may have the same or different compositions.

Examples of the catalytic substance 31 include: platinum group elements such as platinum, palladium, ruthenium, iridium, rhodium, and osmium; metals such as iron, lead, copper, chromium, cobalt, nickel, manganese, vanadium, molybdenum, gallium, and aluminum; and alloys, oxides, double oxides, or carbides thereof. In particular, the catalytic substance 31 is preferably platinum or platinum alloy.

The conductive carriers 32 may be any electrically conductive carriers that are not eroded by the catalyst. The conductive carriers 32 support the catalytic substances 31. The conductive carriers 32 are, for example, carbon particles. Examples of carbon materials used as the carbon particles include powdered carbon materials such as carbon black, graphite, black lead, activated carbon, carbon nanotubes, carbon nanofibers, and fullerene. The carbon particles preferably have a mean primary particle diameter of 10 nm or more and 1,000 nm or less, and more preferably 10 nm or more and 100 nm or less. When the mean primary particle diameter of the carbon particles is equal to or greater than the aforementioned lower limit, the carbon particles are not closely packed in the electrode catalyst layers 12A and 12C, thus not lowering the gas diffusivity of the electrode catalyst layers 12A and 12C. When the mean primary particle diameter of the carbon particles is less than or equal to the aforementioned upper limit, the electrode catalyst layers 12A and 12C can avoid cracking.

The polymer electrolyte aggregate 33 is a mass of polymer electrolytes that are ionomers and aggregated by cohesive forces. The cohesive forces include the Coulomb force or the van der Waals force between the ionomers.

The polymer electrolytes of the aggregate 33 may be any polymer electrolytes having proton conductivity, such as the various electrolytes described above as examples of the materials for the polymer electrolyte membrane 11. The polymer electrolytes used for the polymer electrolyte membrane 11 and the aggregate 33 may be the same or different from each other. In order to reduce the resistance at the interface between the polymer electrolyte membrane 11 and the electrode catalyst layers 12A and 12C and narrow the difference in the rate of dimensional change between the polymer electrolyte membrane 11 and the electrode catalyst layers 12A and 12C due to changes in humidity, the polymer electrolytes used for the polymer electrolyte membrane 11 and the aggregate 33 are preferably the same electrolyte or similar electrolytes.

The fibrous substance 34 is an electron conductive fiber or a proton conductive fiber. The electron conductive fiber is, for example, a fibrous structure composed of carbon. Examples of materials used as the electron conductive fiber include carbon fibers, carbon nanotubes, carbon nanohorns, and conductive polymer nanofibers. In particular, carbon nanofibers are preferably used because of their good conductivity and dispersibility.

The electron conductive fiber may have catalytic ability. The electron conductive fiber having catalytic ability can preferably reduce the use of the catalytic substance 31 composed of noble metal. Examples of the electron conductive fiber having catalytic ability and contained in the electrode catalyst layer 12C forming the air electrode include a carbon alloy catalyst produced from a carbon nanofiber. The electron conductive fiber having catalytic ability may also be a fiber formed from an electrode active material for the fuel electrode. The electrode active material may be a substance containing at least one transition metal element selected from the group consisting of Ta, Nb, Ti, and Zr. Examples of the substance containing a transition metal element include a partial oxide of a carbonitride of a transition metal element, a conductive oxide of a transition metal element, and a conductive oxynitride of a transition metal element.

The proton conductive fiber is a fiber prepared by processing a polymer electrolyte having proton conductivity. The polymer electrolyte of the proton conductive fiber may be, for example, any fluoropolymer electrolyte or any hydrocarbon polymer electrolyte. Examples of the fluoropolymer electrolyte include Nafion (registered trademark, manufactured by DuPont), Flemion (registered trademark, manufactured by Asahi Glass Co., Ltd.), Aciplex (registered trademark, manufactured by Asahi Kasei Corporation), and Gore-Select (registered trademark, manufactured by Gore). Examples of the hydrocarbon polymer electrolyte include sulfonated polyether ketones, sulfonated polyether sulfones, sulfonated polyether ether sulfones, sulfonated polysulfides, sulfonated polyphenylenes, sulfonated polyimides, and acid-doped polybenzoazoles.

The polymer electrolyte of the proton conductive fiber may be the same as or different from the polymer electrolyte of the polymer electrolyte membrane 11 or the aggregate 33. The polymer electrolyte membrane 11, the aggregate 33, and the proton conductive fiber composed of the same or similar polymer electrolytes can reduce the resistance at the interface between the polymer electrolyte membrane 11 and the electrode catalyst layers 12A and 12C and narrow the difference in the rate of dimensional change between the polymer electrolyte membrane 11 and the electrode catalyst layers 12A and 12C caused by changes in humidity.

The fibrous substance 34 contained in the electrode catalyst layers 12A and 12C may be only an electron conductive fiber or only a proton conductive fiber. Alternatively, the fibrous substance 34 contained in the electrode catalyst layers 12A and 12C may include both an electron conductive fiber and a proton conductive fiber. The electrode catalyst layers 12A and 12C preferably include at least one of carbon nanofibers, carbon nanotubes, and proton conductive fibers. However, the electrode catalyst layers 12A and 12C may include no fibrous substance 34.

The fibrous substance 34 preferably has a fiber diameter of 0.5 nm or more and 500 nm or less, and more preferably 5 nm or more and 200 nm or less. When the fiber diameter is within the range, gaps are appropriately formed in the electrode catalyst layers 12A and 12C, thus contributing to an improvement in the output of the fuel cell.

The fibrous substance 34 preferably has a fiber length of 1 µm or more and 50 µm or less, and more preferably 1 µm or more and 20 µm or less. When the fiber length is within the range, the strength of the electrode catalyst layers 12A and 12C is appropriately increased, thus reducing cracking during the formation of the electrode catalyst layers 12A and 12C. Furthermore, gaps are appropriately formed in the electrode catalyst layers 12A and 12C, thus contributing to an improvement in the output of the fuel cell.

The supporting substrates 21A and 21C included in the supporting member 20 are, for example, films composed of: a fluororesin such as an ethylene-tetrafluoroethylene copolymer (ETFE), a tetrafluoroethylene-hexafluoropropylene copolymer (FEP), a tetrafluoroethylene-perfluoroalkyl vinyl ether copolymer (PFA), or polytetrafluoroethylene (PTFE); polyethylene terephthalate; polyethylene naphthalate; syndiotactic polystyrene; polytetrafluoroethylene; or polyimide.

Examples of materials for the adhesive layers 22A and 22C included in the supporting member 20 include an epoxy resin, an acrylic resin, a urethane resin, and a silicone resin.

### [Polymer Electrolyte Fuel Cell]

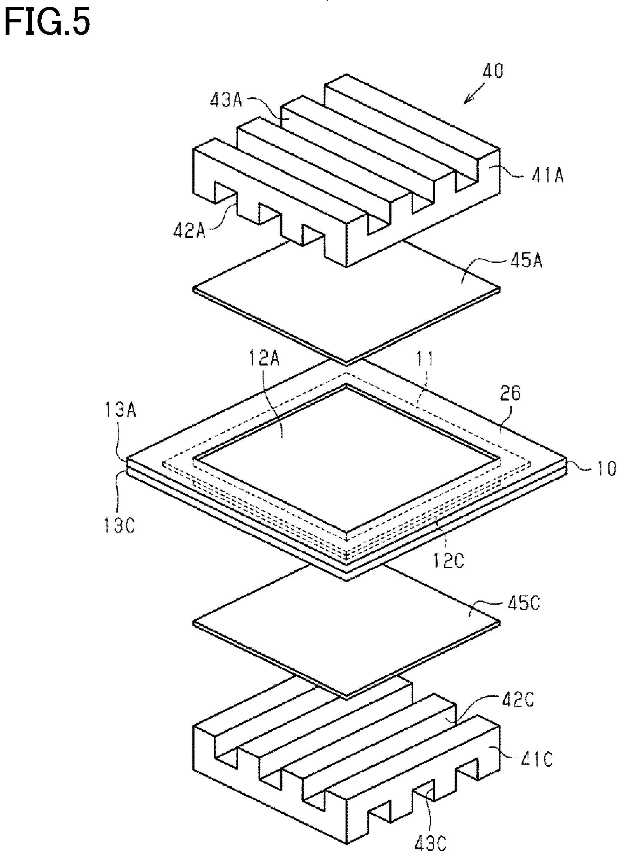

A polymer electrolyte fuel cell 40 including the above-described membrane electrode assembly 10 will be described with reference to Fig. 5.

As illustrated in Fig. 5, the polymer electrolyte fuel cell 40 includes the membrane electrode assembly 10, a pair of separators 41A and 41C, and a pair of gas diffusion layers 45A and 45C. The membrane electrode assembly 10 is sandwiched between the gas diffusion layer 45A and the gas diffusion layer 45C, with the gas diffusion layer 45A in contact with the electrode catalyst layer 12A, and the gas diffusion layer 45C in contact with the electrode catalyst layer 12C. The gas diffusion layers 45A and 45C have electrical conductivity and also the function of diffusing the gas supplied to the electrode catalyst layers 12A and 12C. The gas diffusion layers 45A and 45C may be, for example, carbon cloth or carbon paper.

The laminate of the membrane electrode assembly 10 and the gas diffusion layers 45A and 45C is sandwiched between the separator 41A and the separator 41C. The separators 41A and 41C are formed from a material that is electrically conductive and impermeable to gas. The separator 41A has a gas flow channel 42Aformed in the surface facing the gas diffusion layer 45A, and has a coolant flow channel 43A formed in the surface facing away from the gas diffusion layer 45A. Similarly, the separator 41C has a gas flow channel 42C formed in the surface facing the gas diffusion layer 45C, and has a coolant flow channel 43C formed in the surface facing away from the gas diffusion layer 45C.

In the aforementioned configuration, the electrode catalyst layer 12A and the gas diffusion layer 45A form a fuel electrode serving as the anode, and the electrode catalyst layer 12C and the gas diffusion layer 45C form an air electrode serving as the cathode.

When the polymer electrolyte fuel cell 40 is used, a fuel gas such as hydrogen flows through the gas flow channel 42A in the separator 41A, which is adjacent to fuel electrode, and an oxidant gas such as air or oxygen flows through the gas flow channel 42C in the separator 41C, which is adjacent to the air electrode. In addition, a coolant flows through the coolant flow channels 43A and 43C in the separators 41A and 41C. Then, the fuel gas is supplied from the gas flow channel 42A to the fuel electrode, and the oxidant gas is supplied from the gas flow channel 42C to the air electrode. As a result, the reaction expressed in formula 1 below occurs at the fuel electrode, and the reaction expressed in formula 2 below occurs at the air electrode to generate an electromotive force between the fuel electrode and the air electrode. The fuel electrode may be supplied with an organic fuel such as methanol.

H₂ -> 2H⁺ + 2e⁻ ... (formula 1)

1/2O₂ + 2H⁺ + 2e⁻ -> H₂O ... (formula 2)

The polymer electrolyte fuel cell 40 may be used as a single cell as illustrated in Fig. 5 or may be used as a single polymer electrolyte fuel cell in which multiple single cells are laminated and connected in series.

### [Method for Producing Combined Roll]

Methods for producing the aforementioned combined roll 100 will be described. First, a method for producing the electrode catalyst layers 12A and 12C will be described.

The electrode catalyst layers 12A and 12C are formed by applying catalyst layer slurry containing the materials for the electrode catalyst layers 12A and 12C onto a substrate and drying the resultant coating.

The catalyst layer slurry is prepared by mixing the materials for the electrode catalyst layers 12A and 12C into a dispersion medium and then subjecting the mixture to a dispersion treatment.

The dispersion medium may be a liquid that can dissolve a polymer electrolyte or disperse a polymer electrolyte into a fine gel without eroding the materials for the electrode catalyst layers 12A and 12C and without lowering the high fluidity of the dispersion medium. The dispersion medium preferably includes a volatile liquid organic solvent. When the liquid organic solvent is a lower alcohol, water is preferably mixed in the dispersion medium so as to reduce the risk of fire. Additionally, water may be mixed in the dispersion medium to the extent that the water can prevent the catalyst layer slurry from becoming opaque or coagulated due to the separation of the polymer electrolyte.

The dispersion treatment is performed using, for example, a planetary ball mill, a bead mill, or an ultrasonic homogenizer.

The substrate onto which the catalyst layer slurry is applied may be transfer substrates to be peeled off after the formation of the electrode catalyst layers 12A and 12C or may be the polymer electrolyte membrane 11.

The catalyst layer slurry may be applied to the substrate by any application method. Examples of methods for applying the catalyst layer slurry include application methods using die coating, roll coating, curtain coating, spray coating, and squeegee coating. Among others, an application method using die coating is preferable. Die coating is preferable in that the film thickness is stable in the middle of the application period and intermittent coating is possible.

The coating may be dried by, for example, hot air oven drying, far-infrared (IR) drying, hot plate drying, or vacuum drying. The drying temperature is preferably within the range of 40°C or more and 200°C or less, and more preferably the range of about 40°C or more and 120°C or less. The drying time is preferably within the range of 0.5 minutes or more and 1 hour or less, and more preferably the range of about 1 minute or more and 30 minutes or less.

First, a method for producing the combined roll 100 in which the catalyst layer slurry is applied onto transfer substrates will be described.

In the process in which transfer substrates are used, the catalyst layer slurry is applied onto a transfer substrate to form coating, and then the coating is dried to produce a transfer substrate on which an electrode catalyst layer is laminated. Then, for example, the surface of the electrode catalyst layer on the transfer substrate is brought into contact with the polymer electrolyte membrane 11, and in this state, the transfer substrate is heated and pressed to bond the electrode catalyst layer and the polymer electrolyte membrane 11 together. After that, the transfer substrate is peeled from the electrode catalyst layer. The electrode catalyst layer is bonded to both sides of the polymer electrolyte membrane 11 to give a layered body 15, which is the laminate of the polymer electrolyte membrane 11 and the electrode catalyst layers 12A and 12C.

Additionally, the adhesive sheet 23A is formed by making multiple openings having the same shape as the electrode catalyst layer 12A in the laminate sheet of the supporting substrate 21A and the adhesive layer 22A in such a way that the openings are arranged in the longitudinal direction of the laminate sheet. Likewise, the adhesive sheet 23C is formed by making multiple openings having the same shape as the electrode catalyst layer 12C in the laminate sheet of the supporting substrate 21C and the adhesive layer 22C in such a way that the openings are arranged in the longitudinal direction of the laminate sheet.

The adhesive sheet 23A and the adhesive sheet 23C are, for example, wound into a roll. The adhesive sheet 23A is drawn from the roll and adhered to one side of the outer periphery 11e of the polymer electrolyte membrane 11 in each layered body 15 with the openings aligned with the electrode catalyst layers 12A, while the adhesive sheet 23C is drawn from the roll and adhered to the other side of the outer periphery 11e with the openings aligned with the electrode catalyst layers 12C. This forms the combined roll 100 with the multiple layered bodies 15 sandwiched in series between the adhesive sheet 23A and the adhesive sheet 23C.

The transfer substrates may be, for example, various polymer films such as a film formed from a fluororesin. A fluororesin film has good transfer characteristics. The fluororesin is, for example, an ethylene-tetrafluoroethylene copolymer (ETFE), a tetrafluoroethylene-hexafluoropropylene copolymer (FEP), a tetrafluoroethylene-perfluoroalkyl vinyl ether copolymer (PFA), or polytetrafluoroethylene (PTFE). Examples of other polymeric materials usable for the transfer substrates include polyimide, polyethylene terephthalate, polyamide (nylon (registered trademark)), polysulfone, polyethersulfone, polyphenylene sulfide, polyether ether ketone, polyetherimide, polyarylate, and polyethylene naphthalate.

When the electrode catalyst layers 12A and 12C are transferred from the transfer substrates to the polymer electrolyte membrane 11, the temperature and the pressure applied to the electrode catalyst layers 12A and 12C may affect the power generation performance of the membrane electrode assembly 10. In order to produce the membrane electrode assembly 10 having high power generation performance, the pressure during the transfer of electrode catalyst layers 12A and 12C is preferably within the range of 0.1 MPa or more and 20 MPa or less. The pressure of 20 MPa or less can prevent the electrode catalyst layers 12A and 12C from being overcompressed. The pressure of 0.1 MPa or more can maintain the bonding between the electrode catalyst layers 12A and 12C and the polymer electrolyte membrane 11, thus maintaining the power generation performance. The temperature during the transfer is preferably near the glass transition point of the polymer electrolyte included in the polymer electrolyte membrane 11 or the electrode catalyst layers 12A and 12C in order to improve the bonding at the interface between the polymer electrolyte membrane 11 and the electrode catalyst layers 12A and 12C and to control the interface resistance.

Next, a method for producing the combined roll 100 in which the catalyst layer slurry is applied onto the polymer electrolyte membrane 11 serving as a substrate will be described.

First, the adhesive sheets 23A and 23C formed as described above are drawn from the roll and adhered to the polymer electrolyte membrane 11 with the openings in the adhesive sheets 23A and 23C aligned with the areas on the polymer electrolyte membrane 11 in which the electrode catalyst layers 12A and 12C are to be formed. This forms a strip with the polymer electrolyte membrane 11 sandwiched between the adhesive sheet 23A and the adhesive sheet 23C.

Then, the catalyst layer slurry is applied onto the areas of the polymer electrolyte membrane 11 exposed through the openings in the adhesive sheets 23A and 23C to form coating, and the coating is dried. This forms the electrode catalyst layers 12A and 12C on the polymer electrolyte membrane 11, forming the combined roll 100.

Also in the process in which the catalyst layer slurry is applied to the polymer electrolyte membrane 11 serving as a substrate, the combined roll 100 may be formed by providing the electrode catalyst layers 12A and 12C on the polymer electrolyte membrane 11 before sticking the adhesive sheets 23A and 23C on the polymer electrolyte membrane 11.

### [Examples]

The above-described membrane electrode assembly combined roll and membrane electrode assemblies will be described by means of specific examples and comparative examples.

### (Example 1)

Polymer electrolyte membranes (Nafion 211 manufactured by DuPont) were formed to be 1 mm larger on each side than the electrode catalyst layer to be formed. The electrode catalyst layer to be formed is rectangular in plan view with a long side of 300 mm and a short side of 100 mm.

Next, an adhesive sheet having multiple openings having the same shape as the electrode catalyst layer to be formed was adhered to one side of each polymer electrolyte membrane with the center of each opening aligned with the center of the corresponding polymer electrolyte membrane, and also a similar adhesive sheet was adhered to the other side of each polymer electrolyte membrane with its openings aligned with the openings in the adhesive sheet adhered to the opposite side. The supporting substrate included in each adhesive sheet is a polyethylene naphthalate film (Teonex Q51 manufactured by TEIJIN LIMITED) having a thickness of 0.025 mm. The sticking formed a strip including the supporting member and the polymer electrolyte membranes.

Then, catalyst layer slurry was prepared. First, platinum-supporting carbon (TEC 10E50E manufactured by TANAKA Kikinzoku Kogyo K.K.), which is a conductive carrier carrying catalytic substances, polymer electrolyte dispersion (Nafion dispersion manufactured by Wako Pure Chemical Industries, Ltd.), carbon nanofibers (VGCF-H manufactured by Showa Denko K.K.), which are electron conductive fibers, water, and 1-propanol were mixed to produce a mixture. The platinum-supporting carbon comprises carbon particles carrying platinum, which is a catalytic substance.

The mixture was dispersed using a planetary ball mill for 60 minutes at 300 rpm. In this treatment, zirconia balls with a diameter of 5 mm were added to about one-third of a zirconia container. As a result, catalyst layer slurry was produced. In the catalyst layer slurry, the mass of the polymer electrolyte is 100% by mass relative to the mass of the carbon particles, and the mass of the electron conductive fiber is 100% by mass relative to the mass of the carbon particles. In the dispersion medium, the water concentration is 50% by mass. In the catalyst layer slurry, the solid concentration is 10% by mass.

The catalyst layer slurry was applied using a slit die coater to both sides of the polymer electrolyte membranes within the openings in the above-described strip to form coatings. The coating corresponding to the air electrode has a thickness of 150 µm, and the coating corresponding to the fuel electrode has a thickness of 100 µm. Then, the coatings were dried in a hot air oven at 80 degrees. This formed a strip including a supporting member and layered bodies each composed of a polymer electrolyte membrane and a pair of electrode catalyst layers. The strip was wound to give a combined roll in Example 1. Furthermore, the combined roll was cut into rectangular shapes having a long side of 350 mm and a short side of 150 mm with each electrode catalyst layer at the center to give membrane electrode assemblies.

In the combined roll and the membrane electrode assemblies in Example 1, the outer periphery of the polymer electrolyte membrane had a width W1 of 1.0 mm, and the ratio of the outer periphery area Sm to the catalyst layer area Se was 0.03.

### (Example 2)

A combined roll and membrane electrode assemblies in Example 2 were produced using the same materials and process as in Example 1 except that the polymer electrolyte membranes were formed to be 3 mm larger on each side than the electrode catalyst layer to be formed. The electrode catalyst layer to be formed is rectangular in plan view with a long side of 300 mm and a short side of 100 mm. In the combined roll and the membrane electrode assemblies in Example 2, the outer periphery of the polymer electrolyte membrane had a width W1 of 3.0 mm, and the ratio of the outer periphery area Sm to the catalyst layer area Se was 0.08.

### (Example 3)

A combined roll and membrane electrode assemblies in Example 3 were produced using the same materials and process as in Example 1 except that the polymer electrolyte membranes were formed to be 7 mm larger on each side than the electrode catalyst layer to be formed. The electrode catalyst layer to be formed is rectangular in plan view with a long side of 300 mm and a short side of 100 mm. In the combined roll and the membrane electrode assemblies in Example 3, the outer periphery of the polymer electrolyte membrane had a width W1 of 7.0 mm, and the ratio of the outer periphery area Sm to the catalyst layer area Se waas 0.19.

### (Comparative Example 1)

A combined roll and membrane electrode assemblies in Comparative Example 1 were produced using the same materials and process as in Example 1 except that the polymer electrolyte membranes were formed to be 0.5 mm larger on each side than the electrode catalyst layer to be formed. The electrode catalyst layer to be formed is rectangular in plan view with a long side of 300 mm and a short side of 100 mm. In the combined roll and the membrane electrode assemblies in Comparative Example 1, the outer periphery of the polymer electrolyte membrane had a width W1 of 0.5 mm, and the ratio of the outer periphery area Sm to the catalyst layer area Se was 0.01.

### (Comparative Example 2)

A combined roll and membrane electrode assemblies in Comparative Example 2 were produced using the same materials and process as in Example 1 except that the electrode catalyst layer to be formed was resized, and the polymer electrolyte membranes were formed to be 7 mm larger on each side than the electrode catalyst layer to be formed. The electrode catalyst layer to be formed is rectangular in plan view with a long side of 240 mm and a short side of 100 mm. In the combined roll and the membrane electrode assemblies in Comparative Example 2, the outer periphery of the polymer electrolyte membrane had a width W1 of 7.0 mm, and the ratio of the outer periphery area Sm to the catalyst layer area Se was 0.21.

### (Evaluation)

### <Separation of Supporting Member>

In each example and each comparative example, during the winding into the combined roll and the division of the combined roll into the membrane electrode assemblies, the supporting member was observed to check for any separation from the outer periphery of each polymer electrolyte membrane. The condition in which no separation was found during each of the winding and the division was rated as good, whereas the condition in which a separation was found during at least one of the winding and the division was rated as poor.

### <Wrinkling>

In each example and each comparative example, a gas diffusion layer (GDL SIGRACET 22BB manufactured by SGL) was joined to the electrode catalyst layer of each membrane electrode assembly by thermocompression bonding. During the thermocompression bonding, the heating temperature was 120°C, the pressure was 1 MPa, and the pressing time was three minutes. Then, the edge of the membrane electrode assembly was observed for any wrinkle. The condition in which no wrinkles appeared was rated as good, whereas the condition in which wrinkles appeared was rated as poor.

### (Evaluation Results)

Table 1 shows the width W1 of the outer periphery of the polymer electrolyte membrane, the ratio of the outer periphery area Sm to the catalyst layer area Se, the evaluation results for separation of the supporting member, the evaluation results for wrinkling, and the overall evaluations in each example and each comparative example. In the overall evaluations, the condition in which the evaluations for separation and wrinkles were both good was rated as good, whereas the condition in which at least one of the evaluations for separation and wrinkles was poor was rated as poor.

**[Table 1]**

| | W1 [mm] | Sm/Se | Separation | Wrinkle | Overall Evaluation |
|---|---|---|---|---|---|
| Example 1 | 1.0 | 0.03 | Good | Good | Good |
| Example 2 | 3.0 | 0.08 | Good | Good | Good |
| Example 3 | 7.0 | 0.19 | Good | Good | Good |
| Comp. Ex. 1 | 0.5 | 0.01 | Poor | Good | Poor |
| Comp. Ex. 2 | 7.0 | 0.21 | Good | Poor | Poor |

As listed in Table 1, the supporting member did not separate from the outer periphery in Examples 1 to 3 and Comparative Example 2, in which the outer periphery of the polymer electrolyte membrane had a width W1 of 0.1 mm or more, whereas separation of the supporting member was found in Comparative Example 1, in which the width W1 was smaller than 0.1. Thus, it was confirmed that an outer periphery having a width W1 of 0.1 mm or more was capable of preventing separation of the supporting member from the polymer electrolyte membrane.

In Examples 1 to 3 and Comparative Example 1, in which the ratio of the outer periphery area Sm to the catalyst layer area Se was equal to or smaller than 0.2, the edge of the membrane electrode assembly did not wrinkle. However, in Comparative Example 2, in which the ratio was greater than 0.2, wrinkling was found. Thus, it was confirmed that a ratio equal to or smaller than 0.2 led to the prevention of wrinkling in the edge of the membrane electrode assembly.

As described above by means of the examples, the combined roll, the membrane electrode assembly, and the polymer electrolyte fuel cell according to the first embodiment achieve the advantageous effects described below.
(1) The rolled form of the multiple membrane electrode assemblies 10 facilitates storage and transportation of the membrane electrode assemblies 10.
(2) In the combined roll 100, neither the polymer electrolyte membrane 11 nor the electrode catalyst layers 12A and 12C are disposed at the outer edge of the membrane electrode assembly 10. This roll can thus reduce the amount of materials for the polymer electrolyte membranes 11 used to form the membrane electrode assemblies 10 compared with a roll in which a continuous polymer electrolyte membrane 11 is formed. The combined roll 100 of this type can be incorporated into a roll-to-roll production method and reduce the use of expensive materials.
(3) The outer periphery 11e of the polymer electrolyte membrane 11 has a width W1 of 1 mm or more. This increases the adhesion of the frame unit 26 to the outer periphery 11e, thus preventing the supporting member 20 from separating from the polymer electrolyte membrane 11.
(4) The ratio of the outer periphery area Sm to the catalyst layer area Se is less than or equal to 0.2. This enables an appropriate reduction in the amount of the materials for the polymer electrolyte membrane 11 used to form the membrane electrode assembly 10. Furthermore, the area of the overlap between the polymer electrolyte membrane 11 and the supporting member 20 is not excessively large, and accordingly the edge of the membrane electrode assembly 10 is less likely to wrinkle during the thermocompression bonding of the gas diffusion layers. The wrinkle control can prevent leakage of gas supplied to the electrode catalyst layers 12A and 12C.

### (Second Embodiment)

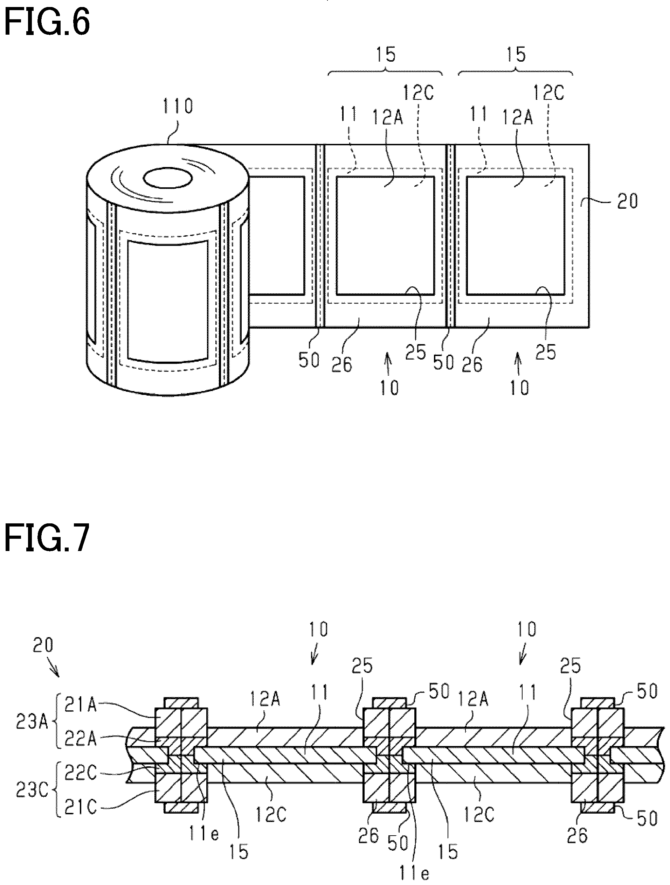

A second embodiment of a membrane electrode assembly combined roll, a membrane electrode assembly, and a polymer electrolyte fuel cell will be described with reference to Figs. 6 and 7. In the following description, differences between the first embodiment and the second embodiment are mainly described. The same reference signs as in the first embodiment denote the same components, and a description thereof is omitted.

As illustrated in Fig. 6, a membrane electrode assembly combined roll 110 according to the second embodiment is different from the combined roll in the first embodiment in that multiple frame units 26 are joined together by attachment members 50.

The combined roll 110 includes multiple layered bodies 15 and a supporting member 20 having the same configuration as in the first embodiment. The supporting member 20 includes multiple frame units 26 arranged in a single direction, and the frame units 26 support the layered bodies 15 on a one-to-one basis. The size and positional relationship of the layered bodies 15 to the frame units 26 is the same as in the first embodiment.

Adjacent frame units 26 are separate discontinuous members, and an attachment member 50 extending in the width direction of the combined roll 110 is positioned in the boundary area between every adjacent frame unit 26. The attachment member 50 contains a glue or an adhesive and is joined to the frame units 26. The attachment member 50 may be, for example, an adhesive tape or formed from a hot-melt adhesive or an ultraviolet-curing adhesive.

The attachment member 50 may span the entire width or a partial width of the combined roll 110 as long as it can join adjacent frame units 26 together. The attachment members 50 may be placed intermittently across the width of the combined roll 110.

A protective film may also be laminated on at least one of the front surface and the rear surface of the strip including the layered bodies 15, the supporting member 20, and the attachment members 50 in order to prevent an attachment member 50 from coming into contact with the layered bodies 15 overlapping the attachment member 50 when the strip is wound into a roll.

As illustrated in Fig. 7, the adjacent end surfaces of adjacent frame units 26 are in contact with each other. In other words, the frame units 26 are arranged in such a way that the front surfaces of adjacent frame units 26, or the surfaces included in the supporting substrates 21A, line up in one plane, and the rear surfaces of adjacent frame units 26, or the surfaces included in the supporting substrates 21C, line up in one plane.

The attachment member 50 is placed on each of the front surface and the rear surface at the boundary between adjacent frame units 26. That is, an attachment member 50 is placed on the surfaces of the supporting substrates 21A of adjacent frame units 26 in a manner that extends across the supporting substrates 21A, and another attachment member 50 is placed on the surfaces of the supporting substrates 21C of adjacent frame units 26 in a manner that extends across the supporting substrates 21C.

The attachment member 50 may be placed on only one of the front surface and the rear surface at the boundary between adjacent frame units 26 as long as it can join the frame units 26 together. To increase the strength of the connection between the frame units 26, it is preferable to provide the attachment member 50 on each of the front surface and the rear surface at the boundary. However, when the attachment member 50 is provided on only one of the front surface and the rear surface at the boundary, the difference in level caused by the attachment member 50 placed at the boundary is smaller than when the attachment member 50 is provided on each of the front surface and the rear surface. This facilitates winding the strip into a roll.

The attachment member 50 preferably has the smallest possible width as long as it can join adjacent frame units 26 together, and the width is preferably, for example, 20 mm or less. In order to reduce the difference in level at the site where the attachment member 50 is placed or facilitate the task of placing the attachment member 50, the attachment member 50 preferably has a thickness of 50 µm or less. The lower limit of the thickness of the attachment member 50 is, for example, 10 µm.

The attachment member 50 is cut along the boundary between the frame units 26 or the attachment member 50 is removed to divide the combined roll 110 into individual membrane electrode assemblies 10. When the membrane electrode assemblies 10 are separated by cutting the attachment member 50, the frame unit 26, or the gasket members 13A and 13C, in each membrane electrode assembly 10 has the cut attachment member 50 left on its edge facing in the direction corresponding to the longitudinal direction of the combined roll 110. Specifically, as the membrane electrode assembly 10 is viewed in the thickness direction of the polymer electrolyte membrane 11, the cut attachment member 50 lies on the edge of the frame unit 26 and extends along the outer periphery of the frame unit 26.

The materials for the membrane electrode assembly 10 and the configuration of the polymer electrolyte fuel cell 40 are the same as in the first embodiment.

For the combined roll 110 according to the second embodiment, the rolled form of the multiple membrane electrode assemblies 10 facilitates storage and transportation of the membrane electrode assemblies 10. Furthermore, in a subsequent process such as placement of the gas diffusion layers 45A and 45C, the easy incorporation of this roll into a roll-to-roll production method can result in easier subsequent processing.

This roll can reduce the materials for the polymer electrolyte membrane 11 used to form the membrane electrode assembly 10 and prevent the membrane electrode assembly 10 from wrinkling at its edge during the thermocompression bonding of the gas diffusion layers compared with a roll in which a continuous polymer electrolyte membrane 11 is formed.

In the production of the combined roll 110 according to the second embodiment, each layered body 15 is first formed in the same manner as described in the first embodiment. The gasket member 13A, which is the laminate of the supporting substrate 21A and the adhesive layer 22A, is formed, and similarly the gasket member 13C, which is the laminate of the supporting substrate 21C and the adhesive layer 22C, is formed. The gasket members 13Aand 13C are formed as a shape corresponding to a single membrane electrode assembly 10. Then, the gasket member 13A and the gasket member 13C are bonded to each layered body 15. This bonding forms the frame unit 26 supporting the layered body 15, and as a result, the individual membrane electrode assemblies 10 are formed separately.

Next, the multiple membrane electrode assemblies 10 are arranged in a row, and the attachment member 50 is placed on the boundary between every adjacent frame unit 26 to join the multiple membrane electrode assemblies 10 together. The resultant strip of the multiple membrane electrode assemblies 10 is wound into the combined roll 110.

In order to shape the outline of each membrane electrode assembly 10 in the above-described production process, it is preferable to arrange two membrane electrode assemblies 10 with the ends of the frame units 26 of the membrane electrode assemblies 10 overlapped with each other, and cut the ends of the frame units 26 along the overlap between the frame units 26. As a result, since the cut end surfaces of the two membrane electrode assemblies 10 are precisely aligned, these membrane electrode assemblies 10 may be arranged with the end surfaces of the membrane electrode assemblies 10 in contact with each other and fixed with the attachment member 50, enabling the adjacent frame units 26 to be joined together without leaving space.

In the combined roll 110 illustrated in this embodiment, the multiple membrane electrode assemblies 10 are joined together with the end surfaces of every adjacent frame unit 26 in contact with each other. However, the multiple membrane electrode assemblies 10 may be joined together with the edges of every adjacent frame unit 26 overlapped in the thickness direction. In this case, although the difference in level at the boundary between the membrane electrode assemblies 10 increases, the burden of alignment for j oining of the membrane electrode assemblies 10 is reduced.

As described above, the combined roll, the membrane electrode assembly, and the polymer electrolyte fuel cell according to the second embodiment achieve the advantageous effect described below in addition to advantageous effects (1) to (4) in the first embodiment.

(5) The membrane electrode assemblies 10 individually formed are joined together to form the combined roll 110. Thus, the combined roll 110 can be formed using sheet-to-sheet production equipment.

### [Reference Signs List]

- 10: Membrane electrode assembly
- 11: Polymer electrolyte membrane
- 11e: Outer periphery
- 12A, 12C: Electrode catalyst layer
- 13A, 13C: Gasket member
- 15: Layered body
- 19S: End surface
- 20: Supporting member
- 21A, 21C: Supporting substrate
- 22A, 22C: Adhesive layer
- 23A, 23C: Adhesive sheet
- 25: Opening
- 26: Frame unit
- 31: Catalytic substance
- 32: Conductive carrier
- 33: Aggregate
- 34: Fibrous substance
- 40: Polymer electrolyte fuel cell
- 41A, 41C: Separator
- 45A, 45C: Gas diffusion layer
- 50: Attachment member
- 100, 110: Combined roll

## Claims

1. A membrane electrode assembly combined roll comprising a wound strip, the strip including
a plurality of layered bodies each including a polymer electrolyte membrane and a pair of electrode catalyst layers in contact with the polymer electrolyte membrane with the polymer electrolyte membrane sandwiched therebetween in a thickness direction, and
a supporting member including a plurality of frame units arranged continuously in a single direction, with each frame unit supporting one of the layered bodies,
wherein as viewed in the thickness direction of the polymer electrolyte membrane, the polymer electrolyte membrane has an outer periphery being a part extending beyond the electrode catalyst layers, with the frame units each having an outer shape larger than an outer shape of the polymer electrolyte membrane,
the frame unit surrounds the electrode catalyst layers and is in contact with the electrode catalyst layers, with the outer periphery held inside the frame unit in the thickness direction, and
as viewed in the thickness direction of the polymer electrolyte membrane, the outer periphery has a width of 1 mm or more, and a ratio of an area of the outer periphery to an area of the electrode catalyst layer is less than or equal to 0.2.

2. A membrane electrode assembly combined roll comprising a wound strip, the strip including
a plurality of layered bodies each including a polymer electrolyte membrane and a pair of electrode catalyst layers in contact with the polymer electrolyte membrane with the polymer electrolyte membrane sandwiched therebetween in a thickness direction,
a plurality of frame units arranged in a single direction, the plurality of frame units each supporting one of the layered bodies, and
an attachment member configured to join adjacent ones of the frame units together,
wherein as viewed in the thickness direction of the polymer electrolyte membrane, the polymer electrolyte membrane has an outer periphery being a part extending beyond the electrode catalyst layers, with the frame units each having an outer shape larger than an outer shape of the polymer electrolyte membrane, and
the frame unit surrounds the electrode catalyst layers and is in contact with the electrode catalyst layers, with the outer periphery held inside the frame unit in the thickness direction.

3. A membrane electrode assembly obtained by dividing the combined roll according to claim 1 or 2 by each of the frame units supporting the layered bodies.

4. A membrane electrode assembly comprising:
a layered body including a polymer electrolyte membrane and a pair of electrode catalyst layers in contact with the polymer electrolyte membrane with the polymer electrolyte membrane sandwiched therebetween in a thickness direction; and
a frame unit configured to support the layered body,
wherein as viewed in the thickness direction of the polymer electrolyte membrane, the polymer electrolyte membrane has an outer periphery being a part extending beyond the electrode catalyst layers, with the frame unit having an outer shape larger than an outer shape of the polymer electrolyte membrane,
the frame unit surrounds the electrode catalyst layers and is in contact with the electrode catalyst layers, with the outer periphery held inside the frame unit in the thickness direction,
as viewed in the thickness direction of the polymer electrolyte membrane, the outer periphery has a width of 1 mm or more, whereas a ratio of an area of the outer periphery to an area of the electrode catalyst layer is less than or equal to 0.2, and
the membrane electrode assembly has an end surface positioned on an edge of the frame unit and being a single surface continuous in the thickness direction.

5. A membrane electrode assembly comprising:
a layered body including a polymer electrolyte membrane and a pair of electrode catalyst layers in contact with the polymer electrolyte membrane with the polymer electrolyte membrane sandwiched therebetween in a thickness direction;
a frame unit configured to support the layered body; and
an attachment member at an edge of the frame unit and extending along an outer periphery of the frame unit as viewed in the thickness direction of the polymer electrolyte membrane,
wherein as viewed in the thickness direction of the polymer electrolyte membrane, the polymer electrolyte membrane has an outer periphery being a part extending beyond the electrode catalyst layers, with the frame unit having an outer shape larger than an outer shape of the polymer electrolyte membrane,
the frame unit surrounds the electrode catalyst layers and is in contact with the electrode catalyst layers, with the outer periphery held inside the frame unit in the thickness direction, and
the attachment member contains a glue or an adhesive and is joined to the frame unit.

6. A polymer electrolyte fuel cell comprising:
a membrane electrode assembly according to any one of claims 3 to 5; and
a pair of separators with the membrane electrode assembly in between.
